# EUROPEAN PATENT SPECIFICATION

(11) **EP 2 425 112 B1**
(45) Date of publication and mention of the grant of the patent: **22.03.2017**
(21) Application number: 09844107.4
(22) Date of filing: 28.04.2009
(51) Int. Cl.: F02M 26/24, F02M 26/28, F02M 26/30, F01P 3/20, F02B 29/04, F28F 9/02, F28D 21/00

(54) **COOLER ARRANGEMENT, A COOLER AND VEHICLE COMPRISING THE COOLER ARRANGEMENT**
KÜHLERANORDNUNG, KÜHLER UND DIE KÜHLERANORDNUNG UMFASSENDES FAHRZEUG
AGENCEMENT DE REFROIDISSEMENT, DISPOSITIF DE REFROIDISSEMENT ET VÉHICULE COMPRENANT L'AGENCEMENT DE REFROIDISSEMENT

(43) Date of publication of application: 07.03.2012
(73) Proprietor: Volvo Lastvagnar AB, 405 08 Göteborg (SE)
(72) Inventor: JEMT, Katarina, SE-412 58 Göteborg (SE); DAHL, Erik, SE-29894 Linderöd (SE)
(74) Representative: Volvo Technology Corporation
(86) International application number: PCT/SE2009/000221
(87) International publication number: WO 2010/126402

(56) References cited:
- EP-A1- 2 051 037
- WO-A1-2008/069743
- FR-A1- 2 856 747
- JP-A- 9 280 118
- JP-A- H09 280 118
- JP-A- 2008 106 688
- JP-A- 2008 231 941
- US-A- 5 186 245
- US-A1- 2005 199 229
- US-A1- 2007 204 614
- US-A1- 2008 169 092
- US-B1- 7 516 779

## Description

### TECHNICAL FIELD

The invention relates to a cooler arrangement and a vehicle comprising a cooler arrangement according to the preamble of independent claim 1.

### BACKGROUND OF THE INVENTION

It is known in the art to use exhaust gas recirculation (EGR) for reducing exhaust gas emissions. The EGR gas is mixed with fresh air from a charge air cooler (CAC) circuit prior to the inlet manifold of the engine. It is important to mix the recirculated exhaust thoroughly with the fresh air in order to provide a constant oxygen content for each cylinder in the engine.

According to the art the recirculated exhaust gas is cooled to such a low temperature as possible. The lowest temperature is limited by freezing of condensed water in a low temperature EGR cooler (LT-EGR cooler) in a multistage EGR cooling circuit. Exhaust gases carry a large amount of water from combustion and intake air. Depending on engine load and pressure the dew point is around 40°C to 60°C.

Condensing water is not a problem as long as the condensed water is introduced in the combustion process continuously. However, water accumulation of a certain volume during low load operation of the engine which is then introduced into the engine at higher load can damage the engine. Furthermore, accumulated water will stay in the LT-EGR cooler when the engine is switched off. In cold ambient, the water can freeze and cause damage besides blocking the LT-EGR cooler. Use of a LT-EGR cooler in cold climate can cause not only condensing but also freezing even during operation. The inner surface of the heat exchanger in the LT-EGR cooler will be covered by ice which can grow in thickness until the LT-EGR cooler is blocked which will deteriorate the operation of the exhaust emission control system. Thus, LT-EGR cooler has to be by-passed when ambient temperatures decrease close to the freezing point of water which results in a loss of efficiency of the exhaust emission control.

In addition to the conventional exhaust gas recirculation (EGR) cooler placed on the engine in multistage EGR cooling circuits the exhaust gas leaving the engine borne high temperature EGR cooler (HT-EGR cooler) may be cooled in a second step for both single stage and dual stage turbo charged engines. The low temperature exhaust gas recirculation can either be cooled by a coolant or directly by the air flow. For instance, WO 2007/055644 discloses a system for exhaust gas recirculation with a HT-EGR cooler and a LT-EGR cooler. The HT-EGR cooler is cooled by a fan whilst the LT-EGR cooler is cooled either by a flow of air or by a separate cooling circuit.

JP H09 280118 relates to a cooler arrangement where an EGR cooler is arranged in a cooler manifold of a cooler. The EGR cooler is arranged in the inlet manifold of a charge air cooler.

### SUMMARY OF THE INVENTION

It is an object of the invention to provide a cooler arrangement which prevents problems with condensed water and freezing in an EGR cooler and is space efficient. Another object of the invention is to provide a vehicle with a safe and efficient operation of the exhaust gas recirculation circuit even in cold ambient.

The objects are achieved by the features of independent claim 1. The other claims and the description disclose advantageous embodiments of the invention. A cooler arrangement for a vehicle is proposed, particularly a commercial vehicle, wherein at least one EGR cooler is arranged in a cooler manifold of a cooler. Integrating the at least one EGR cooler in the cooler manifold is very space efficient. The cooler manifold provides space for the at least one EGR cooler. A cooler medium is contained in the cooler manifold, for instance a liquid or a gas. A cooler manifold is generally arranged at the inlet side (inlet manifold) and the outlet side (outlet manifold) of a cooler. The cooler medium, commonly also called coolant, is distributed from the inlet manifold to channels in the cooler and collected in the outlet manifold. Particularly, the cooler medium is used in a cooling circuit, for instance as engine coolant and the like. A cooling medium (preferably air in an incoming air flow) cools the cooler medium by heat exchange while the cooler medium flows through the channels from the inlet manifold to the outlet manifold.

The vehicle can preferably be a commercial vehicle such as a truck, a trailer or semitrailer, generally of low, medium or heavy duty class. A cooling circuit with an engine coolant can be used to cool an engine. Particularly, the cooler arrangement can be used to cool the engine. The at least one EGR cooler can be a HT-EGR cooler or a LT-EGR cooler in a single or multistage EGR cooling circuit. The at least one EGR cooler is cooled directly by the cooler medium circulating in the cooler, e.g. a radiator or a charge air cooler, and not directly by ambient air. Advantageously, the temperature of the cooler medium is controllable. The cooler medium is cooled by the relative wind flowing through the radiator or charge air cooler. Favourably, by integrating the EGR cooler into the cooler manifold, the cooler medium used to cool the EGR cooler can be controlled with respect to temperature. A favourably low temperature can be achieved without the danger of freezing and subsequently blocking the passage for the exhaust gases through the EGR. Advantageously, the cooling can be controlled via the cooler medium down to temperatures close to the freezing point of water, e.g. down to 5°C or even lower, without the risk of uncontrolled freezing of water contained in the exhaust gases. The cooler medium can be a conventional water/glycol-mixture or gas, e.g. air which is used in a cooling circuit. In a charge air cooler, for instance, the cooler medium can be the charged air.

According to a favourable embodiment of the invention, the at least one EGR cooler can be arranged in a housing of a radiator. The EGR cooler can be immersed in the cooler medium of the radiator in a manifold of the radiator.

According to a favourable embodiment of the invention, the at least one EGR cooler can be arranged in a housing of a charge air cooler. The EGR cooler can be immersed in the cooler medium contained in a cooler manifold of the charge air cooler.

According to a favourable embodiment of the invention, the at least one EGR cooler can constitute a low temperature stage of the multistage cooling circuit. Favourably, the thermal load to the cooler manifold and the EGR cooler can be limited so that the cooler medium and the cooler housing material are virtually not deteriorated by the additional component in the cooler manifold. Particularly, a radiator housing and the radiator manifold can be made of plastics. A low temperature stage EGR cooler can be immersed in the cooler medium, e.g. an engine coolant, particularly a water/glycol-mixture, of the radiator manifold without damaging the housing material due to heating.

According to a favourable embodiment of the invention, the at least one EGR cooler can be arranged in a higher position than an inlet manifold of an engine, which is operationally connected to the EGR cooler. The term "higher position" defines a position above the inlet manifold in a height direction of a vehicle when the cooler arrangement is arranged in the vehicle. The inlet manifold of the engine is provided for feeding air into the combustion engine. Water condensing in the EGR cooler can flow continuously into the engine without the possibility to accumulate in pockets between the EGR cooler and the inlet manifold of the engine. By introducing the water into the engine the power efficiency of the engine can be improved thus improving the efficiency of fuel usage and reducing emissions. For instance, the water can be sprayed into the compression stroke of the engine thus cooling the vapour which results in an increase of power of the engine.

According to a favourable embodiment of the invention, the at least one EGR cooler can be arranged in an outlet manifold of the cooler. The cooler medium in the outlet manifold of the cooler has an advantageous low temperature. Thus an efficient cooling of the medium to be cooled in the at least one EGR cooler can be provided. In case of the cooler being embodied as a radiator, the outlet manifold is usually arranged at the topmost part of the radiator, thus allowing condensed water in the EGR cooler to flow to the engine instead of accumulating.

According to a favourable embodiment of the invention, the at least one EGR cooler can be arranged in an intermediate manifold of the cooler. This is particularly favourable in a case the cooler is embodied as radiator when the radiator is of the back-to-front type with the inlet and outlet manifolds at one side of the radiator, e.g. at the bottom, and the intermediate manifold at the opposite side, e.g. the top of the radiator. Further, the intermediate manifold is usually arranged at the topmost part of the radiator, thus allowing water to flow to the engine instead of accumulating in the piping.

According to a favourable embodiment of the invention, the at least one cooler can be a low temperature radiator. The cooler can be kept at an expediently low temperature level which is available in the cooling circuit of the vehicle.

According to a favourable embodiment of the invention, the cooler can operate in a temperature range below 200°C. Favourably, the temperature of the medium, e.g. exhaust gas, cooled in at least one EGR cooler can be reduced in a high temperature stage to a reasonable value below 200°C, preferably not more than 150°C. This allows to use conventional materials for the radiator and the radiator housing, e.g. a plastics housing. For instance, a conventional plastic material can be used for the radiator manifold.

According to a favourable embodiment of the invention, the at least one EGR cooler can be arranged upstream of a charge air cooler with respect to the exhaust gas flow in the multistage cooling circuit. This is an expedient arrangement for a cooling circuit of a combustion engine. A connection pipe between the at least one EGR cooler and the charge air cooler can be favourably short. Favourably, placing the at least one EGR cooler close to the charge air cooler allows for using a hose connected to the charge air cooler for mixing the recirculated exhaust evacuating from the at least one EGR cooler and the fresh air evacuating from the charge air cooler.

According to a favourable embodiment of the invention, the cooler can be a full face radiator. The term "full face" defines that the extent of the radiator in a plane perpendicular to a longitudinal direction of the vehicle substantially covers an opening in the front of an engine compartment when viewed in a longitudinal direction of the vehicle. In case of a full face radiator, the charge air cooler can be arranged at the rear of the engine.

According to an alternative favourable embodiment of the invention, the cooler can be a non-full-face radiator. The term "non-full face" defines that the extent of the radiator in a plane perpendicular to a longitudinal direction of the vehicle is substantially smaller than the extent of an opening in the front of an engine compartment in said plane perpendicular to the longitudinal direction of the vehicle. Expediently, the radiator can be located adjacent a charge air cooler. After being cooled in the at least one EGR cooler integrated in a manifold of the radiator, the exhaust gases need to travel only a very short distance, e.g. a few centimetres or a few millimetres, to the charge air cooler outlet manifold, where the exhaust gas is mixed with fresh compressed air.

In both embodiments with a full face or a non-full face radiator, the cooler medium used for cooling the at least one EGR cooler need not to be routed back to the engine, only back to the radiator inlet manifold. If the radiator cooler medium is only used for cooling the at least one EGR cooler integrated in the radiator housing, e.g. in the radiator outlet manifold, no cooler medium from this circuit needs to be routed back to the engine. If the radiator cooler medium is employed for cooling one or more additional components than the at least one EGR cooler, e.g. for transmission cooling, hoses and pipes routed to the engine can have a smaller diameter than otherwise.

According to a favourable embodiment of the invention, the cooler can provide a separator for thermal isolation of the at least one EGR cooler and a portion of the coolant circulating in the cooler. Advantageously, cold cooler medium which is meant for other cooling purposes than the at least one EGR cooler is not in thermal contact with the at least one cooler and consequently not heated up unintentionally.

According to another aspect of the invention, a cooler for a vehicle is proposed, particularly for a commercial vehicle, comprising a cooler housing, wherein an EGR cooler is arranged in the cooler housing. The cooler constitutes a space efficient component for a multistage cooling circuit employed for an engine such as a combustion engine.

According to a favourable embodiment of the invention, the EGR cooler can be arranged in a cooler manifold of the radiator. The cooler medium of the radiator, the temperature of which is controllable, can be used as cooler medium for cooling the EGR cooler. Freezing of water in the EGR cooler can be avoided.

According to a favourable embodiment of the invention, the EGR cooler can be arranged in the cooler outlet manifold. The cooler medium in the outlet manifold is at the lowest temperature available in the cooler and can be used to cool the at least one cooler.

According to another aspect of the invention, a vehicle is proposed, particularly a commercial vehicle, comprising a cooler arrangement comprising at least one radiator and one or more coolers. At least one EGR cooler is arranged in a cooler housing of a cooler. The at least one EGR cooler can constitute a stage of a multistage cooling circuit for cooling a medium in more than one stages. Integrating the at least one EGR cooler in the cooler, e.g. a radiator or a charge air cooler, is very space efficient and allows for a controlled cooling of the EGR cooler. Freezing at low temperatures in the EGR cooler can be avoided. The at least one EGR cooler is effectively and in a controlled way cooled by the cooler medium. The vehicle can preferably be a truck, such as a heavy duty, a medium duty or a light duty truck. A space efficient multistage cooling circuit, by way of example an exhaust gas recirculation cooling circuit, can be provided.

### BRIEF DESCRIPTION OF THE DRAWINGS

The present invention together with the above-mentioned and other objects and advantages may best be understood from the following detailed description of the embodiments, but not restricted to the embodiments, wherein is shown schematically:
- Fig. 1: a first example embodiment of a cooler arrangement with a non-full-face radiator according to the invention;
- Fig. 2a-c: a part of a second and a third further example embodiments of the cooler arrangement comprising a non-full-face radiator with an outlet manifold encompassing a second cooler, adjacent to a charge air cooler (Fig. 2a) in a back view, and a variant where a charge air cooler encompasses a second cooler (Fig. 2b) and a detail of the charge air cooler encompassing the second cooler (Fig. 2c) in a back view;
- Fig. 3: a part of a fourth example embodiment of the cooler arrangement comprising a full-face radiator with an outlet tank encompassing a second cooler, adjacent to a charge air cooler in a back view;
- Fig. 4: a fifth example embodiment of the cooler arrangement with a full-face radiator;
- Fig. 5: a part of a sixth example embodiment of the cooler arrangement comprising a front-to back-type radiator with an intermediate cooler manifold encompassing a cooler in a side view; and
- Fig. 6: a preferred vehicle comprising the cooler arrangement.

### DETAILED DESCRIPTION OF PREFERRED EMBODIMENTS OF THE INVENTION

In the drawings, equal or similar elements are referred to by equal reference numerals. The drawings are merely schematic representations, not intended to portray specific parameters of the invention. Moreover, the drawings are intended to depict only typical embodiments of the invention and therefore should not be considered as limiting the scope of the invention.

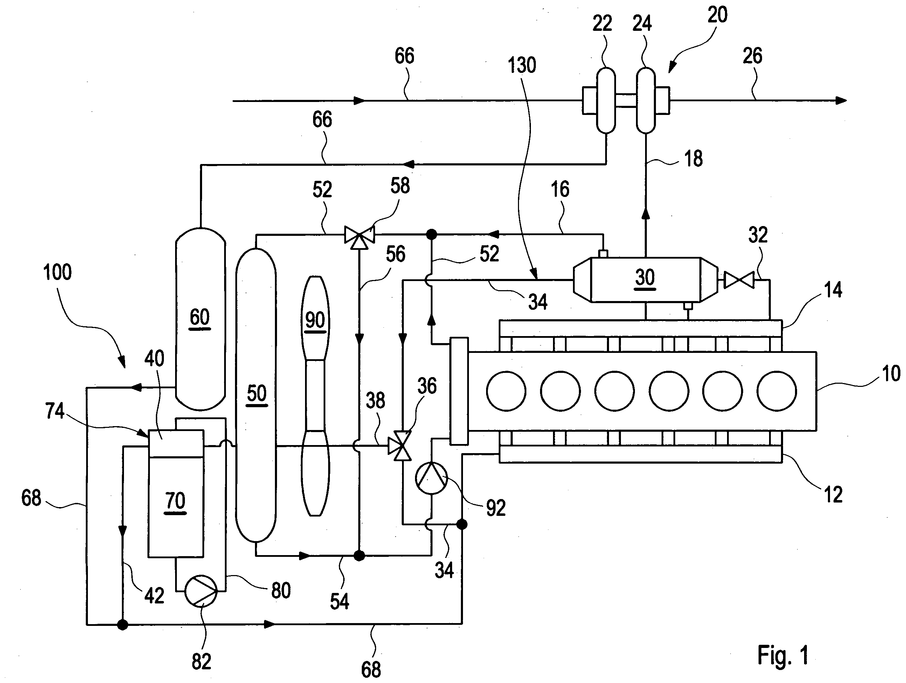

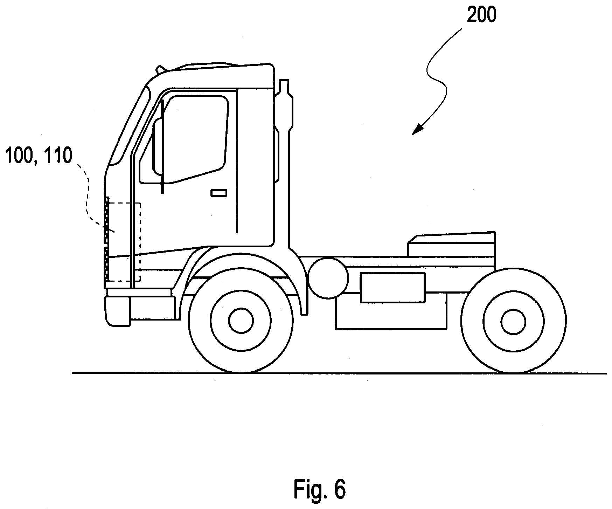

Fig. 1 depicts schematically a first embodiment of a cooler arrangement 100 for a vehicle 200 (Fig. 6) comprising a multistage cooling circuit 130 for exhaust gas recirculation (EGR) with an engine 10. The multistage cooling circuit 130 has a high temperature EGR cooler 30 (HT EGR cooler 30) arranged at the outlet manifold 14 of the engine 10 and a low temperature EGR cooler 40 (LT-EGR cooler 40) integrated in an outlet manifold 74 of a low temperature radiator 70 (LT radiator 70). The low temperature radiator is configured for a temperature up to about 10-15°C above an ambient temperature, i.e. rarely above 50°C. The LT radiator 70 has a coolant circuit 80. A pump 82 circulates the cooler medium through the LT radiator 70. The cooler medium is also often called "coolant". The cooler medium can be an engine coolant, particularly water/glycol mixture, or charged air in a charge air cooler or the like. The manifold 74 is often called "tank".

A portion of the exhaust gas from the engine 10 is fed through a pipe 32 into the HT-EGR cooler 30, whereas another portion of the exhaust gas is directly fed into an exhaust line 18 (bypassing the HT EGR cooler) and transferred into a catalyst section 26 via a turbine 24 of a turbocharger 20. A compressor 22 of the turbocharger 20 in the air feed pipe 66 compressed fresh air which is cooled in a charge air cooler 60. The cooled air is fed to an inlet manifold 12 of the engine 10 through an output pipe 68. Cooled exhaust is fed into the output pipe 68 and mixed with the fresh air.

The LT radiator 70 is by way of example a non-full-face radiator as it is arranged adjacent to (beside) the charge air cooler 60. Both together constitute the foremost area of the cooling package in front of the engine 10.

An engine coolant cools the exhaust gas in the HT-EGR cooler 30. The engine coolant is fed through pipe 52 to a radiator 50 as cooler medium and cooled coolant, i.e. cooled cooler medium, through pipe 54 back to the engine 10. A part of the engine coolant can flow through the HT-EGR cooler 30 and through pipe 16 and is mixed with the engine coolant in pipe 52. A coolant pump 92 in pipe 54 circulates the coolant. Air is sucked into the engine compartment via a fan 90 downstream of the radiator 50. The radiator 50 can be by-passed by the engine coolant through a by-pass pipe 56. The coolant flow can be split by a valve 58 located in the input pipe 52.

Exhaust gas which is cooled in the HT-EGR cooler 30 is fed back to the inlet manifold 12 of the engine and the air pipe 68, respectively, through a recirculation pipe 34. Typically exhaust gas is cooled below 200°C in the HT-EGR cooler 30. A valve 36 in the recirculation pipe 34 can feed a portion of the precooled exhaust gas to the LT-EGR cooler 40 through a feed pipe 38. After cooling further down, the portion of the exhaust gas is fed into the air pipe 68 upstream of the exhaust gas directly originating from the HT-EGR cooler 30.

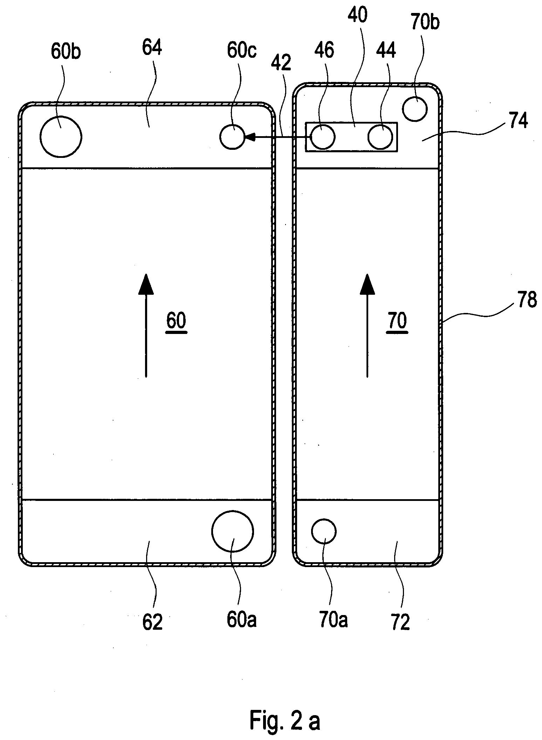

Fig. 2a illustrates a part of a second embodiment of the cooler arrangement not included in the scope of protection. More specifically, Fig. 2a illustrates a back view of a non-full-face LT radiator 70 with a housing 78 and an outlet manifold 74 encompassing the LT-EGR cooler 40, adjacent to the charge air cooler 60. The outlet manifold 74 is often called "outlet tank".

The LT radiator 70 comprises a tubular system (not shown) comprising a plurality of narrow, spaced tubes extending between an inlet tank 72 and the outlet tank 74 for transporting the coolant, wherein the air sucked into the engine compartment via the fan 90 flows between the tubes.

Coolant (cooler medium) circulating through the LT radiator 70 is cooled by the wind sucked through the LT radiator 70 by the fan 90 (Fig. 1). The cooler medium enters the radiator 70 through a port 70a in an inlet manifold 72 and evacuates the LT radiator 70 through a port 70b in the outlet manifold 74. The LT-EGR cooler 40 integrated in the LT radiator 70 is cooled by the coolant of the LT radiator 70. Exhaust gas enters the LT-EGR cooler 40 through port 44 and leaves the LT-EGR cooler through port 46 towards an input port 60c of the charge air cooler 60. The LT-EGR cooler 40 may comprise a tubular system (not shown) comprising a plurality of narrow, spaced tubes extending between the port 44 and the port 46 for transporting the exhaust gases, wherein the coolant in the outlet tank cooles the tubes. The distance of the connection 42 (shown in Fig. 1 as pipe 42) is favourably very short in the range of only a few centimetres down to a few millimetres. The cooling air flows perpendicular to the faces of the charge air cooler 60 and the LT radiator 70, i.e. perpendicular to the paper plane of the drawing.

Compressed air enters the charge air cooler 60 through a port 60a in an inlet tank 62 of the charge air cooler 60 and leaves the charge air cooler 60 through a port 60b in an outlet manifold 64 of the charge air cooler 60 where it is mixed with the exhaust gas coming from the LT-EGR cooler 40.

Expediently, the cooler medium is continuously circulated in the LT radiator 70 in order to avoid overheating of the LT radiator 70 by the precooled exhaust gas.

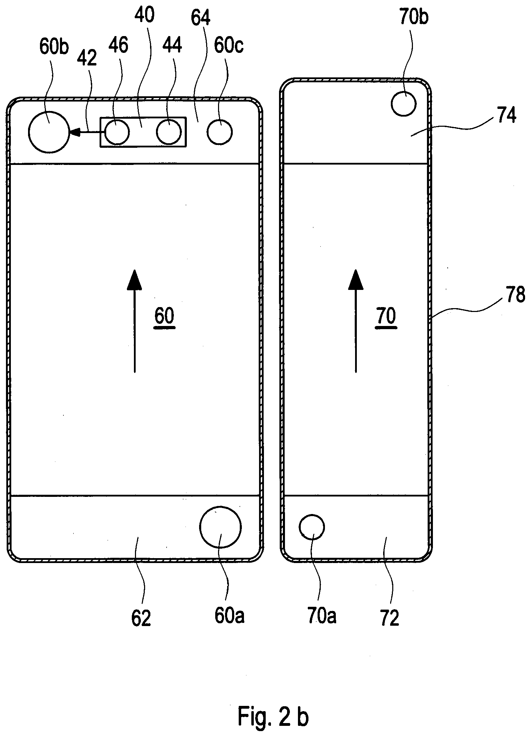

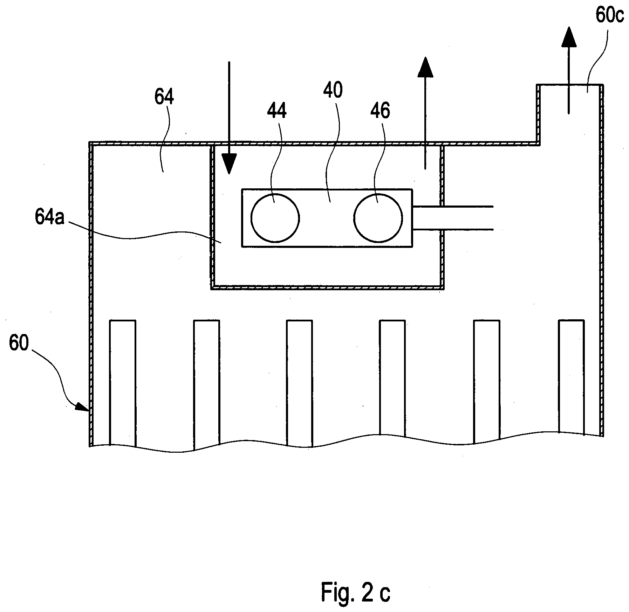

A part of a third embodiment of the cooler arrangement, not included in the scope of protection, with a charge air cooler 60 encompassing an LT-EGR cooler 40 as second cooler can be seen in Fig. 2b. Fig. 2c displays a detail of this arrangement. The LT-EGR cooler 40 is disposed in the outlet manifold 64 of the charge air cooler 60, wherein the LT-EGR cooler 40 is immersed in a compartment 64a of the outlet manifold 64. The LT-EGR cooler 40 can be immersed in a separate coolant, e.g. engine coolant from a low-temperature coolant circuit, indicated by ingoing and outgoing arrows in the compartment 64a. The cooled exhaust gas from the LT-EGR cooler 40 is mixed with cooled charge air in the outlet manifold 64 of the charged air cooler 60 and discharged towards the engine through output port 60c.The arrangement is compact and space efficient.

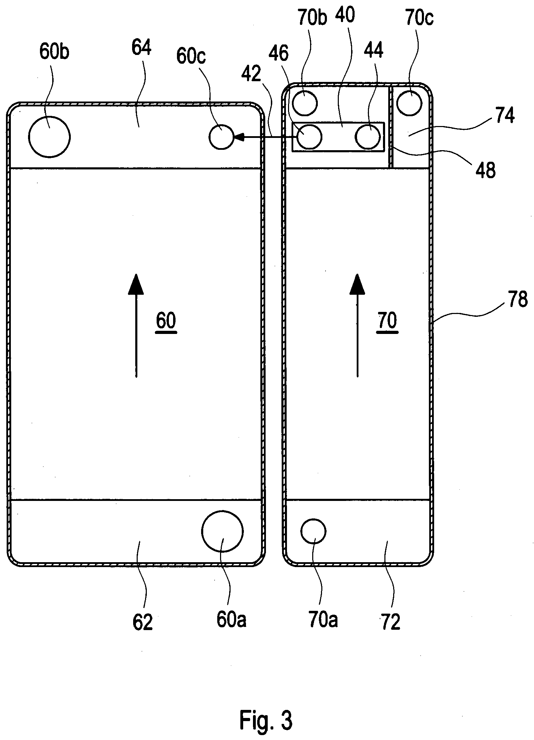

Fig. 3 illustrates a fourth embodiment of the cooler arrangement. More specifically, Fig. 3 illustrates a back view of a non-full-face LT radiator 70 like in Fig. 1 with a housing 78 and an outlet manifold 74 encompassing the LT-EGR cooler 40, adjacent to the charge air cooler 60.

Cooler medium circulating through the LT radiator 70 is cooled by the wind sucked through the LT radiator 70 by the fan 90 (Fig. 1). The cooler medium enters the radiator 70 through a port 70a in the inlet manifold 72 and evacuates the LT radiator 70 through ports 70b and 70c in the outlet manifold 74 which is divided by a separator wall 48 in two compartments. Coolant in the compartment where port 70c is located is virtually not in thermal contact with the LT-EGR cooler 40 which is located in the compartment of port 70b.

The LT-EGR cooler 40 integrated in the LT radiator 70 is cooled by the cooler medium of the LT radiator 70. Exhaust gas enters the LT-EGR cooler 40 through port 44 and leaves the LT-EGR cooler through port 46 towards an input port 60c of the charge air cooler 60.

The distance of the connection 42 (shown in Fig. 1 as pipe 42) is favourably very short in the range of only a few centimetres down to a few millimetres. The cooling air flows perpendicular to the faces of the charge air cooler 60 and the LT radiator 70, i.e. perpendicular to the paper plane of the drawing.

Compressed air enters the charge air cooler 60 through port 60a in an inlet manifold 62 of the charge air cooler 60 and leaves the charge air cooler 60 through port 60b in an outlet manifold 64 of the charge air cooler 60 where it is mixed with the exhaust gas coming from the LT-EGR cooler 40.

Expediently, the cooler medium is continuously circulated in the LT radiator 70 in order to avoid overheating of the LT radiator 70 by the precooled exhaust gas.

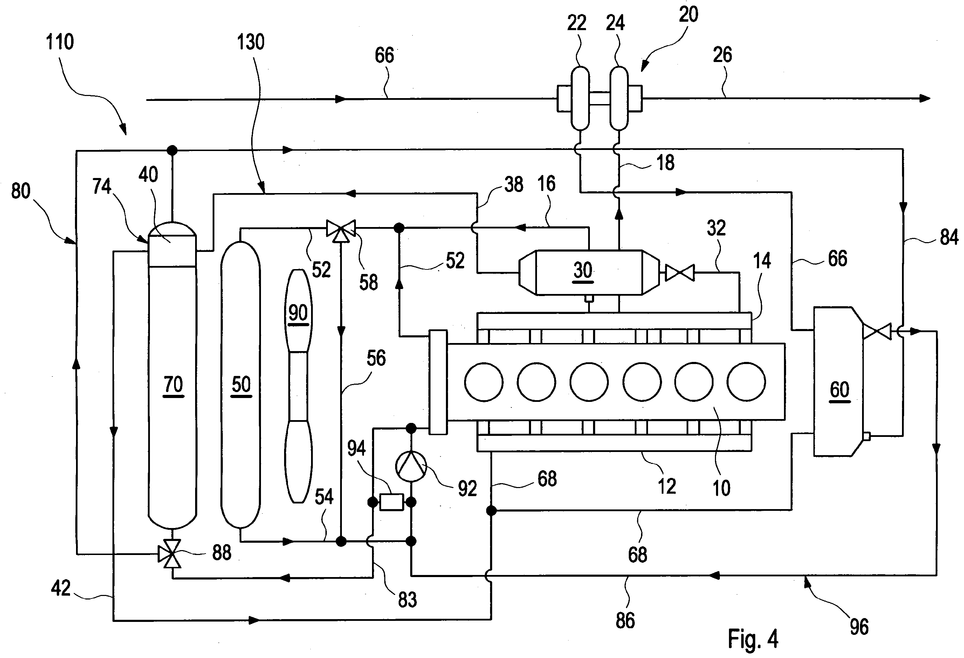

Fig. 4 illustrates a fifth embodiment of the cooler arrangement. The cooler arrangement comprises a full-face radiator 70 according to the invention is shown.

The cooler arrangement 110 comprises a multistage cooling circuit 130 for exhaust gas recirculation (EGR) with an engine 10. The multistage cooling circuit 130 has a high temperature EGR cooler 30 (HT EGR cooler 30) arranged at the outlet manifold 14 of the engine 10 and a low temperature EGR cooler 40 (LT-EGR cooler 40) integrated in an outlet manifold 74 of a low temperature radiator 70 (LT radiator 70). The LT radiator 70 has a coolant circuit 80. The coolant circuit 80 is parallel to a second coolant circuit 96. The coolant circuits 80 and 96 are connected by a valve 88. The second cooling circuit 96 comprises a pipe 84 from the LT radiator 70 to a charge air cooler 60 arranged at the rear of the engine 10, the charge air cooler 60, a pipe 86 from the charge air cooler 60 to a pump 92 which circulates the coolant in the second coolant circuit 96, and a pipe 83 from the engine 10 to the LT radiator 70.

The coolant in the second coolant circuit 96 can be mixed with engine coolant fed to the engine 10. The engine coolant is cooled in a radiator 50 fed to the engine 10 through an output pipe 54 to which pipe 86 connects.

An engine coolant cools the exhaust gas in the HT-EGR cooler 30. The engine coolant is fed through pipe 52 to a radiator 50 and cooled coolant through pipe 54 back to the engine 10. A part of the engine coolant can flow through the HT-EGR cooler 30 and subsequently through pipe 16 and is mixed with the engine coolant in pipe 52. A coolant pump 92 in pipe 54 circulates the coolant. Air is sucked into the engine compartment via a fan 90 downstream of the radiator 50. The engine coolant can by-pass the radiator 50 through a by-pass pipe 56. The coolant flow can be split by a valve 58 located in the input pipe 52. An element 94 is arranged between pipe 83 and 86.

A portion of the exhaust gas from the engine 10 is fed through a pipe 32 into the HT-EGR cooler 30, whereas another portion of the exhaust gas is directly fed into the exhaust line 18 and transferred into a catalyser section 26 via a turbine 24 of a turbocharger 20. A compressor 22 of the turbocharger 20 in the air feed pipe 66 compressed fresh air which is cooled in a charge air cooler 60. The cooled air is fed to an inlet manifold 12 of the engine 10 through an output pipe 68. Cooled exhaust evacuated from the LT-EGR cooler 40 is fed into the output pipe 68 and mixed with the fresh air.

The HT-EGR cooler 30 is connected directly to the LT radiator 70 by a pipe 38 and from the LT-EGR cooler 40 back through a pipe 42 to pipe 68 where recirculated and now cooled exhaust gas can be mixed with fresh air and the mixture fed to the inlet manifold 12 of the engine 10 as mentioned above. Typically exhaust gas is cooled below 200°C in the HT-EGR cooler 30.

The LT radiator 70 is a full-face radiator arranged as foremost one of the radiators 40, 50 of the cooling package in front of the engine 10, whereas the charge air cooler 60 is arranged at the rear of the engine.

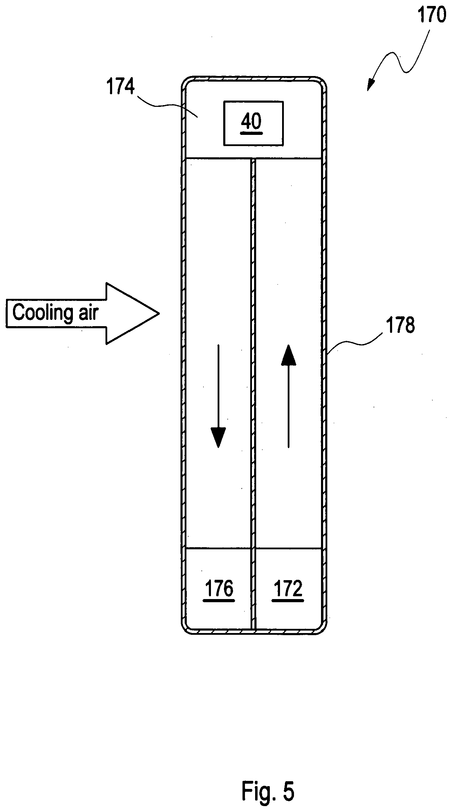

Fig. 5 shows a LT radiator 170 in a side view according to a sixth example embodiment of the cooler arrangement not included in the scope of protection. The LT radiator 170 can be a full face or a non-full-face device. The LT radiator 170 is arranged as of a "back-to-front" type, i.e. the coolant inlet and outlet tanks are on the same side of the radiator housing 178. The coolant enters the radiator housing 178 through an inlet tank 172 in the bottom, flows upwards to an intermediate tank 174 and back downwards to the outlet tank 176. The flow direction is indicated by arrows in the radiator housing 178. The cooling air is indicated by a bold arrow parallel to the paper plane of the drawing.

A second cooler 40, preferably a LT-EGR cooler 40 is arranged in the intermediate manifold 174 of the LT radiator 170 and cooled by the radiator coolant flowing from the inlet manifold 172 in the bottom to the intermediate manifold 174 in the top and back to the outlet manifold 176 in the bottom.

Referring now to Fig. 6, a preferred vehicle according to the invention is shown which incorporates a cooler arrangement 100 or 110 which was described in Fig. 1 and Fig. 3.

A LT-EGR cooler 40 (Fig. 1, Fig. 4) can be integrated in an outlet manifold 74 of a LT-radiator 70 (Figs. 3, 4) or in an intermediate manifold 174 of an LT radiator 170 (Fig. 5). The EGR gases may have temperatures of around 150 °C, which means that a plastic manifold 74, 174 can be used for the radiator 70, 170.

The cooler medium used for LT-EGR cooling does not need to be routed to the engine 10 (Fig. 1, Fig. 4), only back again to the LT-radiator inlet manifold 72, 172. If the LT radiator coolant is used only for the LT-EGR cooling it is not necessary to rout cooler medium from this circuit to the engine. If the LT radiator cooler medium is used for other purposes as well, e.g. as coolant for cooling a transmission, hoses and pipes routed to the engine 10 (Fig. 1, Fig. 4) can have smaller diameter than otherwise.

Integration of the LT-EGR cooler 40 into the LT radiator 70, 170 saves cost and weight. Engine packaging is facilitated, since there is no additional component on the engine 10 such as an engine mounted LT-EGR cooler. Either no LT coolant at all, or a smaller amount of coolant has to be routed to the engine, which once again facilitates packaging. The present invention can be implemented on all trucks comprising LT-EGR cooling.

## Claims

1. A cooler arrangement (100, 110) for a vehicle (200), particularly a commercial vehicle, in which cooler arrangement (100, 110) at least one EGR cooler (40) is arranged in a cooler manifold (74, 174) of a cooler (60, 70, 170) **characterized in that** the cooler (60, 70, 170) provides a separator (48) for thermal isolation of the at least one EGR cooler (40) and a portion of the coolant circulating in the cooler (60, 70, 170).

2. The cooler arrangement of claim 1, **characterized in that** the at least one EGR cooler (40) is arranged in a housing (78, 178) of a radiator (70, 170).

3. The cooler arrangement of claim 1, **characterized in that** the at least one EGR cooler (40) is arranged in a housing of a charge air cooler (60).

4. The cooler arrangement of any preceding claim, **characterized in that** the at least one EGR cooler (40) constitutes a low temperature stage of an EGR cooling circuit (130) for cooling an exhaust gas in more than one stages.

5. The cooler arrangement according to any preceding claim, **characterized in that** the at least one EGR cooler (40) is arranged in a higher position than an inlet manifold (12) of an engine (10), which is operationally connected to the EGR cooler (40).

6. The cooler arrangement according to any preceding claim, **characterized in that** the at least one EGR cooler (40) is arranged in an outlet manifold (74) or an intermediate manifold (174) of the cooler (60, 70, 170).

7. The cooler arrangement according to any preceding claim, **characterized in that** the cooler (70, 170) is a low temperature radiator.

8. The cooler arrangement according to any preceding claim, **characterized in that** the cooler (60, 70, 170) operates in a temperature range below 200°C.

9. The cooler arrangement according to any preceding claim, **characterized in that** the at least one EGR cooler (40) is arranged upstream of a charge air cooler (60) with respect to the exhaust gas flow in a multistage cooling circuit (130).

10. The cooler arrangement according to any preceding claim, **characterized in that** the cooler (70, 170) is a full face radiator.

11. The cooler arrangement according to anyone of the claims 1 to 9, **characterized in that** the cooler (70, 170) is a non-full-face radiator.

12. The cooler arrangement according to claim 9 and 11, **characterized in that** the at least one radiator (70, 170) is located adjacent the charge air cooler (60).

13. A vehicle (200), particularly a commercial vehicle, comprising a cooler arrangement (100, 110) according to anyone of the claims 1 to 12.

## Patentansprüche

1. Kühleranordnung (100, 110) für ein Fahrzeug (200), insbesondere ein Nutzfahrzeug, wobei in der Kühleranordnung (100, 110) wenigstens ein EGR-Kühler (40) in einem Kühler-Sammler (74, 174) eines Kühlers (60, 70, 170) angeordnet ist, **dadurch gekennzeichnet, dass** der Kühler (60, 70, 170) eine Trenneinrichtung (48) zur thermischen Isolierung des wenigstens einen EGR-Kühlers (40) und eines Abschnitts des in dem Kühler (60, 70, 170) zirkulierenden Kühlmittels bereitstellt.

2. Kühleranordnung nach Anspruch 1, **dadurch gekennzeichnet, dass** der wenigstens eine EGR-Kühler (40) in einem Gehäuse (78, 178) eines Radiators (70, 170) angeordnet ist.

3. Kühleranordnung nach Anspruch 1, **dadurch gekennzeichnet, dass** der wenigstens eine EGR-Kühler (40) in einem Gehäuse eines Ladeluftkühlers (60) angeordnet ist.

4. Kühleranordnung nach einem vorhergehenden Anspruch, **dadurch gekennzeichnet, dass** der wenigstens eine EGR-Kühler (40) eine Niedrigtemperaturstufe eines EGR-Kühl-Kreislaufs (130) zum Kühlen eines Abgases in mehr als einer Stufe darstellt.

5. Kühleranordnung nach einem vorhergehenden Anspruch, **dadurch gekennzeichnet, dass** der wenigstens eine EGR-Kühler (40) an einer höheren Position als ein Einlass-Sammler (12) eines Motors (10) angeordnet ist, der mit dem EGR-Kühler (40) funktionell verbunden ist.

6. Kühleranordnung nach einem vorhergehenden Anspruch, **dadurch gekennzeichnet, dass** der wenigstens eine EGR-Kühler (40) in einem Auslass-Sammler (74) oder einem Zwischen-Sammler (174) des Kühlers (60, 70, 170) angeordnet ist.

7. Kühleranordnung nach einem vorhergehenden Anspruch, **dadurch gekennzeichnet, dass** der Kühler (70, 170) ein Niedrigtemperaturradiator ist.

8. Kühleranordnung nach einem vorhergehenden Anspruch, **dadurch gekennzeichnet, dass** der Kühler (60, 70, 170) in einem Temperaturbereich unter 200°C arbeitet.

9. Kühleranordnung nach einem vorhergehenden Anspruch, **dadurch gekennzeichnet, dass** der wenigstens eine EGR-Kühler (40) stromaufwärts von einem Ladeluftkühler (60) in Bezug auf die Abgasströmung in einem Mehrstufenkühlkreislauf (130) angeordnet ist.

10. Kühleranordnung nach einem vorhergehenden Anspruch, **dadurch gekennzeichnet, dass** der Kühler (70, 170) ein vollflächiger Radiator ist.

11. Kühleranordnung nach einem der Ansprüche 1 bis 9, **dadurch gekennzeichnet, dass** der Kühler (70, 170) ein nicht-vollflächiger Radiator ist.

12. Kühleranordnung nach Anspruch 9 und 11, **dadurch gekennzeichnet, dass** der wenigstens eine Radiator (70, 170) angrenzend an den Ladeluftkühler (60) angeordnet ist.

13. Fahrzeug (200), insbesondere Nutzfahrzeug, umfassend eine Kühleranordnung (100, 110) nach einem der Ansprüche 1 bis 12.

## Revendications

1. Agencement de refroidisseur (100, 110) pour un véhicule (200), particulièrement un véhicule utilitaire, où l'agencement de refroidisseur (100, 110) au moins un refroidisseur EGR (40) est agencé dans un collecteur de refroidissement (74, 174) d'un refroidisseur (60, 70, 170) **caractérisé en ce que** le refroidisseur (60, 70, 170) fournit un séparateur (48) pour une isolation thermique de l'au moins un refroidisseur EGR (40) et une partie du liquide de refroidissement circulant dans le refroidisseur (60, 70, 170).

2. Agencement de refroidisseur de la revendication 1, **caractérisé en ce que** l'au moins un refroidisseur EGR (40) est agencé dans un boîtier (78, 178) d'un radiateur (70, 170).

3. Agencement de refroidisseur de la revendication 1, **caractérisé en ce que** l'au moins un refroidisseur EGR (40) est agencé dans un boîtier d'un refroidisseur d'air de suralimentation (60).

4. Agencement de refroidisseur de l'une des revendications précédentes, **caractérisé en ce que** l'au moins un refroidisseur EGR (40) constitue un étage basse température d'un circuit de refroidissement EGR (130) pour refroidir un gaz d'échappement dans plus d'un étage.

5. Agencement de refroidisseur selon l'une des revendications précédentes, **caractérisé en ce que** l'au moins un refroidisseur EGR (40) est agencé dans une position plus élevée qu'un collecteur d'admission (12) d'un moteur (10), qui est fonctionnellement relié au refroidisseur EGR (40).

6. Agencement de refroidisseur selon l'une des revendications précédentes, **caractérisé en ce que** l'au moins un refroidisseur EGR (40) est agencé dans un collecteur de sortie (74) ou un collecteur intermédiaire (174) du refroidisseur (60, 70, 170).

7. Agencement de refroidisseur selon l'une des revendications précédentes, **caractérisé en ce que** le refroidisseur (70, 170) est un radiateur basse température.

8. Agencement de refroidisseur selon l'une des revendications précédentes, **caractérisé en ce que** le refroidisseur (60, 70, 170) fonctionne dans une plage de température inférieure à 200°C.

9. Agencement de refroidisseur selon l'une des revendications précédentes, **caractérisé en ce que** l'au moins un refroidisseur EGR (40) est agencé en amont d'un refroidisseur d'air de suralimentation (60) par rapport à l'écoulement de gaz d'échappement dans un circuit de refroidissement à plusieurs étages (130).

10. Agencement de refroidisseur selon l'une des revendications précédentes, **caractérisé en ce que** le refroidisseur (70, 170) est un radiateur couvrant.

11. Agencement de refroidisseur selon l'une quelconque des revendications 1 à 9,
**caractérisé en ce que** le refroidisseur (70, 170) est un radiateur non-couvrant.

12. Agencement de refroidisseur selon les revendications 9 et 11, **caractérisé en ce que** l'au moins un radiateur (70, 170) est situé de manière adjacente au refroidisseur d'air de suralimentation (60).

13. Véhicule (200), particulièrement un véhicule utilitaire, comprenant un agencement de refroidisseur (100, 110) selon l'une quelconque des revendications 1 à 12.
